# FASCICULE DE BREVET EUROPEEN

(11) **EP 3 522 700 B1**
(45) Date de publication et mention de la délivrance du brevet: **13.05.2026**
(21) Numéro de dépôt: 17787468.2
(22) Date de dépôt: 02.10.2017
(51) Int. Cl.: A01K 1/01

(54) **BOITE DÉPLIABLE A PAROIS PRÉCONTRAINTES**
FALTSCHACHTEL MIT VORGESPANNTEN WÄNDEN
FOLDING BOX WITH PRESTRESSED WALLS

(30) Priorité: 07.10.2016 FR 1601461
(43) Date de publication de la demande: 14.08.2019
(73) Titulaire: SARL GENERATION TECH, 75008 Paris (FR)
(72) Inventeur: CALDAS, Raphael, 92000 Nanterre (FR)
(86) Numéro de dépôt international: PCT/FR2017/000180
(87) Numéro de publication internationale: WO 2018/065681

(56) Documents cités:
- FR-A1- 2 933 329
- US-A- 3 343 660
- US-A- 3 756 495
- US-A1- 2003 102 363
- US-A1- 2011 308 991

## Description

La présente invention concerne le domaine technique des boites pliables pour tous usages et plus particulièrement ceux à destination des animaux.

Le nettoyage des bacs à litière pour animaux domestiques, impliquant un contact direct ou indirect avec les déchets, est pénible et présente des risques sanitaires notamment pour les femmes enceintes. Celui-ci devient également compliqué lors des déplacements en dehors de l'habitat quotidien.

Sont connus les produits munis d'une grille de rabattement ainsi que ceux équipés d'un système à tiroirs ou à tamis. Ces produits sont généralement encombrants et difficile à transporter. De plus, n'étant pas destinés à être jeté, ils ne suppriment que partiellement le contact avec la litière souillée.

Les produits pliables et jetables permettent un gain en propreté, en temps et en place. Ils résolvent également mieux le problème du nettoyage. Dans ce domaine, les méthodes suivantes sont connues :
GB2305348 qui décrit un conteneur à litière pliable mais dont le volume en position fermée ne permet aucun gain de place et ne facilite donc pas le transport.
FR2742308 qui décrit un dispositif où un sac en plastique comportant un fond en carton absorbant et pliable peut être fermé et jeté, mais nécessitant d'être utilisé avec un bac récepteur,
FR2718607 qui décrit un bac pliable et étanche équipé d'un sac permettant de fermer et jeter le bac et son contenu,
WO2000032493 qui décrit un conteneur formé de modules qui, une fois repliés, permettent d'obtenir un conteneur ne présentant pas d'ouverture,
FR3013560 qui décrit un ensemble pliable et jetable composé d'un bac et de litière absorbante présentant des renforts au niveau des coins, fermés par assemblage,
FR2754421 qui décrit une caisse de propreté jetable avec litière et dont l'assemblage nécessite des collages ou des agrafes,
FR2666194 qui décrit un conditionnement jetable avec litière, imperméabilisé sur la face intérieure et glacée sur la face extérieure, dont le couvercle peut être ouvert sur trois de ses quatre côtés et simplement rabattu sous ledit conditionnement sans autre moyen de fixation,
WO2006072674 qui décrit une boite jetable et hermétique avec litière dont les parois sont solidaires entre elles grâce aux ergots des rabats frontaux et arrières qui s'enclenchent dans les rabats latéraux,
US 4164314 qui décrit un emballage prêt à l'emploi dont les parois sont maintenues par l'engagement mutuel des onglets et des fentes formées par des perforations dans les sections supérieures,
FR2706243 qui décrit un dispositif selon lequel une mallette se transforme en boite par le jeu articulatoire des charnières à soufflets, gigognes, treillis, rabattables, ou autres des parois latérales.

Les documents US 2011/308991 A1, US 3 343 660 A et US 2003/102363 A1 divulguent une boite avec parois précontraintes. Les documents FR 2 933 329 A1 et US 3 756 495 A décrivent un procédé d'obtention d'une boite.

Ces différentes techniques présentent des inconvénients et constituent des solutions partielles à la problématique. Leur inconvénient majeur réside dans leur conception qui contraint l'industriel ou l'utilisateur final à un exercice manuel du type pliage, collage, ou encore agrafage, souvent peu commode à comprendre puis à entreprendre, ceux-ci pouvant nécessiter des fournitures (ciseaux, colle, agrafeuse) ou l'ajout de pièces supplémentaires pour assurer la rigidité de l'ensemble. De plus, la mauvaise exécution de ces opérations peut affaiblir l'étanchéité et la stabilité du bac, rendant celui-ci impropre à son usage par l'animal et remettant en cause son efficacité hygiénique.

Parmi les techniques connues, seules celles proposant des parois latérales très basses, voire à la limite du niveau minimum de litière nécessaire, parviennent à proposer un montage sans travaux manuel. Toutefois des parois latérales aussi peu élevées ne permettent pas de contenir la litière à l'intérieur du bac en luttant contre les projections, et remet là encore en cause l'efficacité hygiénique de la solution.

Du point de vue économique, la multitude de composants et de reprise nécessaires au montage augmentent de manière significative le coût de revient de ce produit jetable, ce qui tend à le rendre difficilement distribuable via une chaine de distribution classique en raison du nombre d'intervenant.

L'art antérieur des boites à litières à usage temporaire ne résout pas suffisamment les aspects qualitatifs d'un produit de fabrication industrielle en termes de design, hygiène, limitation des mauvaises odeurs, résistance à l'humidité et recyclage des produits en fin de vie.
La présente invention permet de remédier aux difficultés de l'art antérieur.

La présente invention porte sur une boite à litière à usage temporaire qui remédie aux opérations de nettoyage et ainsi au contact avec les déjections de façon simple, efficace et hygiénique. La simplicité de sa conception et de sa construction ne nécessite aucun ajout de pièces supplémentaires ni de manipulation pour construire ladite boite à litière.

Une telle boite à litière peut être utilisée par exemple comme solution de voyage lors des déplacements avec l'animal en dehors de l'habitat quotidien, ou comme solution dans la vie quotidienne au domicile. Cette boite à litière peut être associée ou non à de la litière de sorte à constituer une boite tout en un immédiatement prête à l'emploi.

La boite à litière selon l'invention est défini dans la revendication 1 et apporte une solution nouvelle au problème de construction en imposant un effet ressort et une mémoire de forme en arc précontraint aux parois latérales de ladite boite de sorte à ce que celles-ci adoptent une rigidité en position ouverte garantissant la fonctionnalité de ladite boite et ce sans nécessiter de manipulation pour la construire. Cette technique autorise l'utilisation de parois latérales suffisamment hautes malgré l'absence de travaux de montage préalables.

L'invention a pour objet une boite à litière composée d'un complexe multicouches associant plusieurs feuilles contrecollées les unes aux autres et ayant chacune leur utilité vis-à-vis des propriétés mécaniques, esthétiques, biodégradables, recyclable, étanches, non salissantes et désodorisante de l'invention. Par exemple, le caractère désodorisant peut être obtenu par l'insertion d'une feuille imprégnée de charbon actif parmi les couches constituant le complexe.

Selon une autre caractéristique particulière, la présente invention permet de remédier aux difficultés de l'art antérieur en offrant à la fois une solution fonctionnelle sans travaux de construction préalables à l'utilisation et une solution luttant contre les mauvaises odeurs et les projections de litières hors de la boite. En combinant ces avantages, la boite selon l'invention est plus pratique, plus hygiénique et a un coût de fabrication plus économique que les techniques antérieures.

Selon d'autres caractéristiques particulières, l'invention peut comporter :
- Un complexe multicouches composé de 2 à 5 feuilles fortement adhérentes entre elles, dont l'épaisseur de chaque feuille peut être comprise entre 0.05 millimètres et 5 millimètres suivant le degré de rigidité désiré,
- Au moins une feuille dudit complexe multicouches a, sur au moins une face de ladite boite, des propriétés de résistance à l'eau pour une meilleure durabilité,
- Une feuille composée de charbon actif avec ou sans micro-perforation pour limiter les odeurs,
- Au moins une feuille dudit complexe multicouches est un film plastique composé d'au moins une matière,
- Au moins une feuille dudit complexe multicouches est un film plastique bicouches co-laminé de polyéthylène (PE) sur une de ses faces pour améliorer son adhésion,
- Au moins une feuille dudit complexe multicouches est un film plastique biodégradable pour le respect de l'environnement,
- Au moins une feuille dudit complexe multicouches est un film plastique possédant des caractéristiques destinées au thermo-scellage sur un support à base de fibres de papier pour améliorer la productivité industrielle,
- Au moins une feuille dudit complexe multicouches est un film plastique possédant des caractéristiques destinées au thermoformage pour une bonne définition de la forme,
- Au moins une feuille dudit complexe multicouches est micro-perforé et laisse passer de l'air sous pression à travers son épaisseur pour permettre le thermo-scellage ou le thermoformage d'une des feuilles composant le complexe,
- Au moins une feuille dudit complexe multicouches est microporeuse à l'état naturel et laisse passer de l'air sous pression a travers son épaisseur pour permettre le thermo scellage ou le thermoformage d'une des feuilles composant le complexe,
- Au moins une feuille dudit complexe multicouches est une feuille de carton pour un meilleur recyclage,
- Au moins une feuille est pré-imprégnée d'un parfum ou d'un désodorisant pour limiter les mauvaises odeurs,
- Au moins une feuille dudit complexe multicouches est une feuille de carton ondulé sur laquelle est préalablement contrecollée une feuille de papier paraffiné ayant des propriétés de résistance à l'humidité et des propriétés anti-salissures pour une meilleure durabilité et un meilleur aspect,
- Au moins une feuille dudit complexe multicouches est une feuille de carton à alvéoles pour une rigidité accrue,
- Au moins une feuille dudit complexe multicouches est une feuille imprimée d'un décor pour améliorer l'aspect esthétique du produit,
- Au moins une feuille dudit complexe multicouches est une feuille recouverte d'un vernis à caractéristiques étanches ou microporeuses pour améliorer la finition du produit fini,
- La boite selon l'invention présente une forme carrée ou rectangulaire dont les 4 angles sont des pans coupés pour éviter toute déformation pendant le transport,
- La boite selon l'invention comporte un fond et au moins quatre parois verticales sur lesquelles ont été pré-marqués à l'outil plusieurs plis pour réaliser des soufflets permettant une meilleure mise en forme ultérieure,
- Lesdites parois verticales et lesdits soufflets sont arc-boutés entre eux en partie haute en position dépliée pour une meilleure rigidité,
- La boite selon l'invention peut être équipée d'un couvercle pouvant être imprimé de textes et de décors améliorant le design de la boite ou la communication sur le produit,
- La boite selon l'invention peut être équipée d'un couvercle dont le dessus présente des pointillés de prédécoupe et des marquages de plis permettant d'obtenir des accessoires préfabriqués liés à l'utilisation,
- Une pelle permettant de retirer les excréments de la litière peut être obtenue après détachement du couvercle prédécoupé et après pliage,
- Un tapis de propreté avec un décor imprimé peut être obtenu après détachement du couvercle prédécoupé, qui trouve ainsi une nouvelle utilité,
- La boite selon l'invention peut être équipée d'un bord replié périphérique de 45° à 90° vers l'intérieur lui aussi réalisé sous contrainte avec une mémoire de forme en arc de sorte à rigidifier ladite boite et constituer une solution contre les projections de litière.
- La mémoire de forme en arc précontraint du complexe multicouches est obtenue selon l'invention grâce à au moins une feuille adhérente de géométrie et de dimensions légèrement supérieure à la feuille qu'elle recouvre et à laquelle elle adhère, ladite feuille qu'elle recouvre et à laquelle elle adhère a été découpé avec un développé à plat (par exemple avec des tracés rectilignes) alors que la feuille de géométrie et de dimensions légèrement supérieur est positionnée et contrecollée à froid ou à chaud sur la boite déjà mise en forme et maintenue sur une matrice de précontrainte par un vide d'air,
- La mémoire de forme en arc précontraint du complexe multicouches est obtenue selon un autre exemple pas revendiqué grâce à l'étirement à chaud de la dernière feuille qui est thermoformée sur le complexe multicouches déjà mis en forme sur une matrice de précontrainte,
- L'épaisseur de la boite selon l'invention en position repliée est inférieure à 15 millimètres pour une version standard basse et inférieure à 100 millimètres pour une version rehaussée permettant d'y inclure de la litière pour animaux,
D'autres caractéristiques particulières et avantages de l'invention apparaîtront au cours de la description qui va suivre et faite en référence aux dessins annexés sur lesquels :
- La fig.1 est une vue schématique en perspective de la boite selon l'invention, en position dépliée, faisant apparaitre les plis des soufflets de pliage et le bord arc-bouté de ladite boite,
- La fig.2 est une vue schématique en coupe de la boite selon l'invention, en position dépliée, avec bord, qui fait apparaitre les différentes feuilles de matériaux pouvant composer le complexe multicouches,
- La fig.3, est une vue schématique en coupe de la boite selon l'invention, en position dépliée, sans bord, qui fait apparaitre les différentes feuilles de matériaux pouvant composer le complexe multicouches selon une version simplifiée,
- La fig.4 est une vue schématique du dessus de la boite selon l'invention, en position pliée, sans couvercle,
- La fig.5 est une vue schématique en perspective de la boite selon l'invention, en position dépliée, faisant apparaitre la ligne de pliage de ladite boite, selon une version rehaussé,
- La fig.6 est une vue schématique en perspective de la boite selon l'invention, positionnée dans sa matrice de précontrainte et en position fermée,
- La fig.7 est une vue schématique en perspective de la boite selon l'invention, dans son action de dépliage,
- La fig.8 est une vue schématique en perspective de la boite selon l'invention, dans son action de dépliage, selon une version rehaussée,
- La fig.9 est une vue schématique du couvercle fabriqué à plat de la boite selon l'invention.
- La fig.10 est une vue schématique développée de la boite selon l'invention, fabriquée à plat, imprimée d'un décor.
- La fig.11 est une vue schématique en perspective du couvercle de la boite selon l'invention, faisant apparaitre les pointillés de prédécoupe pour obtenir deux pelles.
- La fig.12 est une vue schématique en perspective de la boite selon l'invention, en position pliée, sans couvercle, selon une version rehaussée,
- La fig.13 est une vue schématique du développé de la pelle fabriquée à plat,
- La fig.14 est une vue schématique de la pelle en position roulée et pliée.

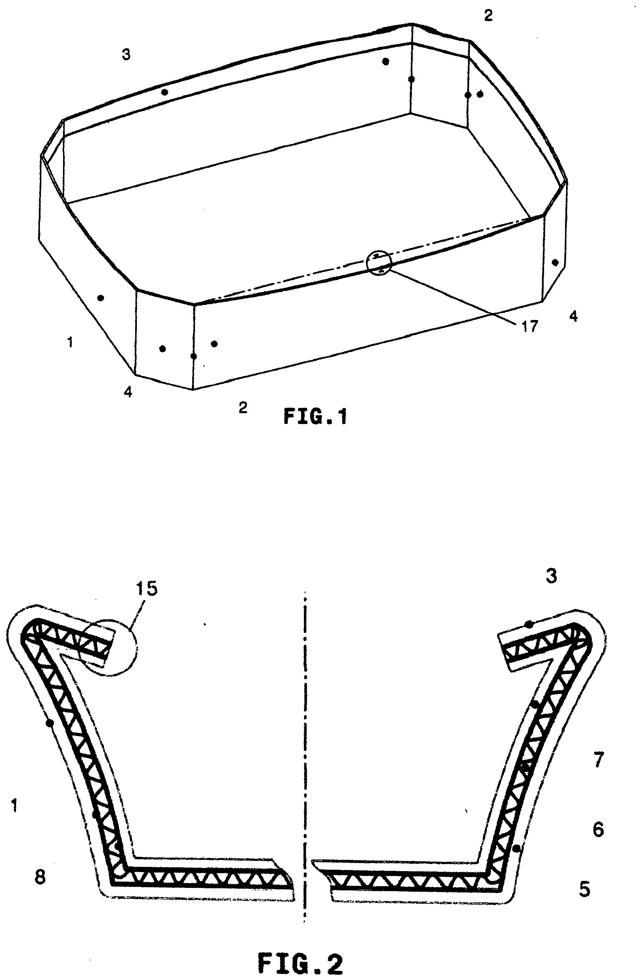

Sur la fig.1, on a représenté schématiquement la boite (1) selon l'invention composée d'un fond et de quatre parois verticales sur lesquelles ont été pré-marqué à l'outil plusieurs plis (2) pour réaliser des soufflets (16) permettant le pliage des parois de la boite (1) après la découpe à plat de tout ou partie du développé de la dite boite (1).

Sur la fig.1, on a représenté schématiquement un bord replié (3) de 45° à 90° vers l'intérieur de ladite boite (1) de sorte à constituer une solution contre les projections de litière.

Sur la fig.1, on a représenté schématiquement les pans coupés (4) constituants les quatre angles de ladite boite (1).

Sur la fig.1, on a représenté schématiquement la mémoire de forme (17) des parois de la dite boite (1) en arc précontraint vers l'extérieur assurant une bonne rigidité à ladite boite (1) en position dépliée, l'empêchant de se replier.

Sur la fig.2, on a représenté schématiquement ledit bord replié (3) avantageusement obtenu par un marquage sur 2/3 de l'épaisseur des parois avec un outil non tranchant réalisé sur une bande périphérique d'environ 20 millimètres.

Sur la fig.2, on a représenté schématiquement différentes feuilles de matériaux pouvant composer le complexe multicouches (15), constituant la boite (1) selon l'invention, tels qu'un film plastique (7), une feuille de carton ondulé (6) et une feuille de papier paraffiné (5), ou une feuille composée de charbon actif avec ou sans micro-perforation et la façon selon laquelle ces feuilles sont assemblées. Pour cela, au moins une feuille est recouverte d'au moins un adhésif (8) fortement adhérent.

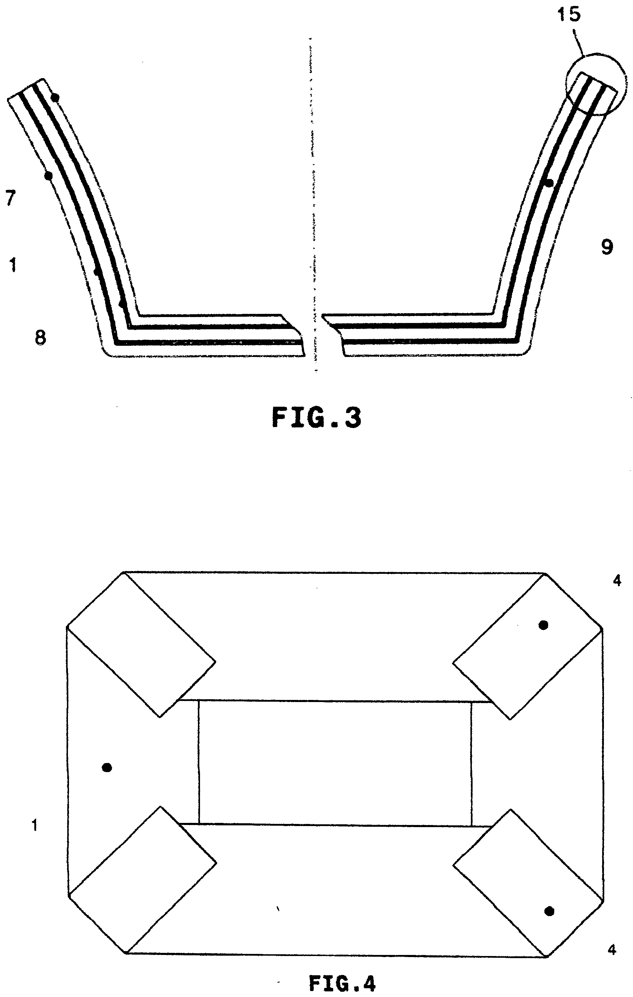

Sur la fig.3, on a représenté schématiquement une composition moins rigide du complexe multicouches (15), constituant la boite (1) selon l'invention, tels que composé d'un film plastique (7) et d'une feuille de carton simple (9), et la façon selon laquelle ces feuilles composantes sont assemblées. Pour cela, au moins une feuille est recouverte d'au moins un adhésif (8).

Sur la fig.4, on a représenté schématiquement la boite (1) en position pliée et le positionnement des pans coupés (4) dans cette position.

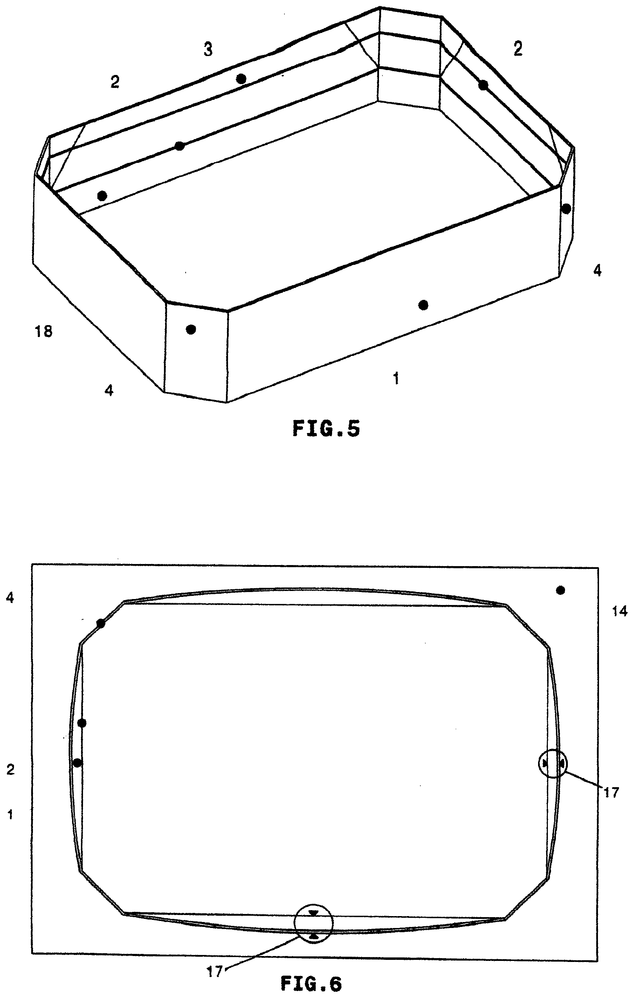

Sur la fig.5, on a représenté schématiquement la boite (1) selon l'invention, selon une version où le fond a été rehaussé (18) pour permettre d'y inclure une litière, de sorte à ce que la boite (1) constitue un ensemble prêt à l'emploi.

Sur la fig.6, on a représenté schématiquement la boite (1) selon l'invention, positionnée dans son moule après avoir été découpée à plat et que ses plis (2) aient été marqués. Le moule sert d'une part de matrice de précontrainte (14) et d'autre part d'outils de modification de géométrie de la boite (1) découpée à plat. La boite (1) est plaquée en force sur les parois du moule par un vide d'air.

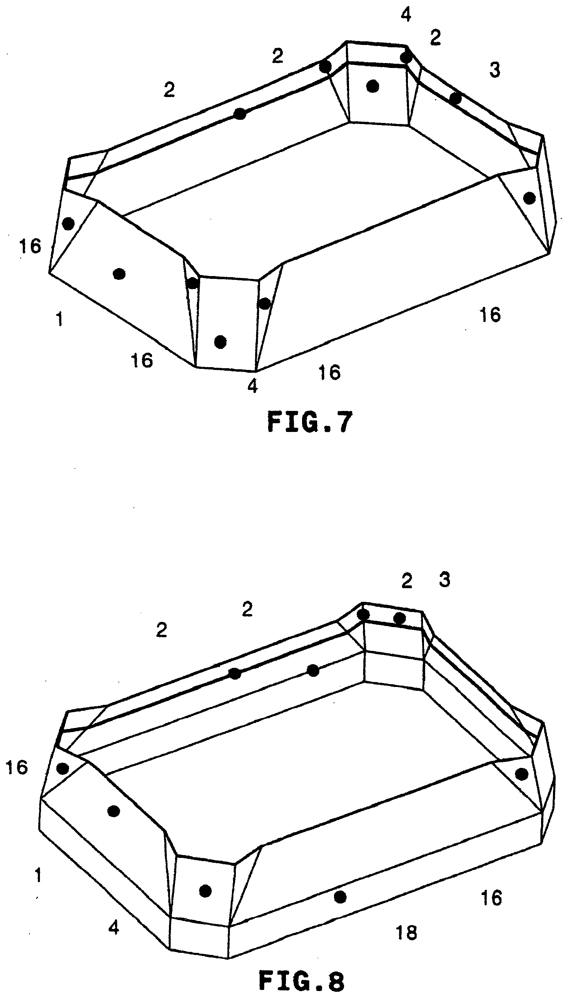

Sur la fig.7, on a représenté schématiquement la boite (1) selon l'invention, en présentant la trajectoire suivie par les pans coupés (4), les soufflets de pliage (16), et le bord replié (3) durant l'ouverture de ladite boite (1).

Sur la fig.8, on a représenté schématiquement la boite (1) selon l'invention, dans sa version rehaussée (18), en présentant la trajectoire suivie par les pans coupés (4), les soufflets de pliage (16), et le bord replié (3) durant l'ouverture de ladite boite (1).

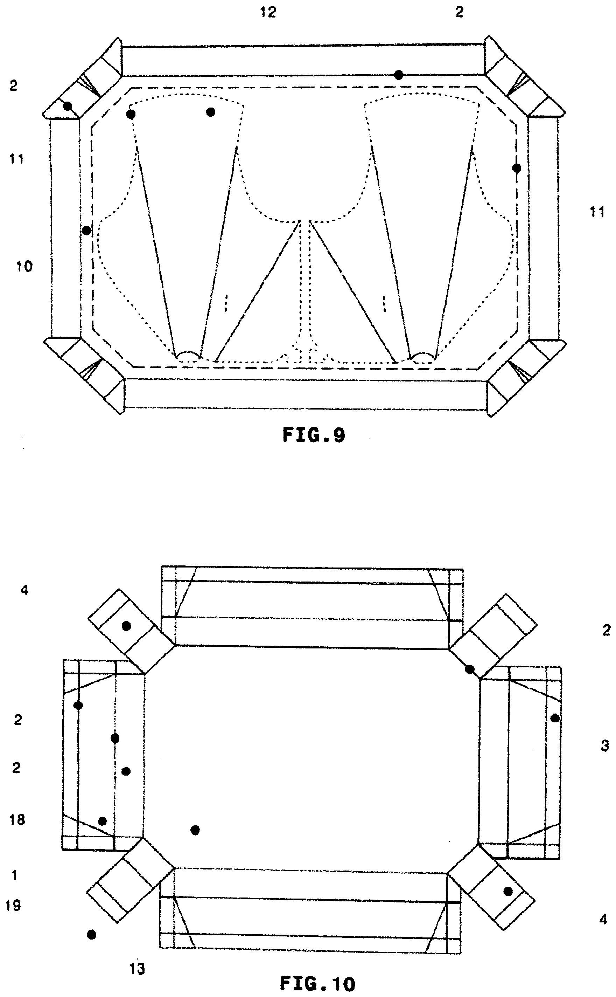

Sur la fig.9, on a représenté schématiquement le couvercle (10) fabriqué à plat de la boite (1) selon l'invention, en présentant les plis (2) dudit couvercle (10) et les pointillés (11) de prédécoupe permettant d'obtenir des accessoires préfabriqués à plat liés à l'utilisation.

Sur la fig.10, on a représenté schématiquement la boite (1) selon l'invention dans sa version rehaussée (18), fabriquée à plat et imprimée d'un décor (13). On observe dans cet exemple que toute les lignes sont rectilignes.

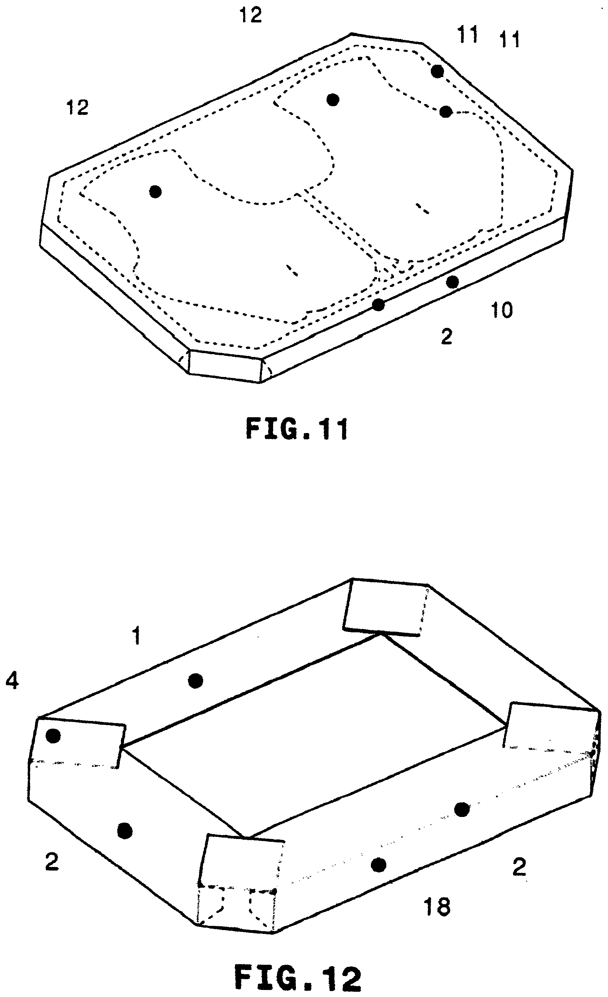

Sur la fig.11, on a représenté schématiquement le couvercle (10) de la boite (1) selon l'invention présentant les pointillés (11) de prédécoupe permettant d'obtenir des accessoires préfabriqués à plat liés à l'utilisation.

Sur la fig.12, on a représenté schématiquement la boite (1) selon l'invention dans sa version rehaussée (18) où les parois latérales et les pans coupés (4) sont rabattus.

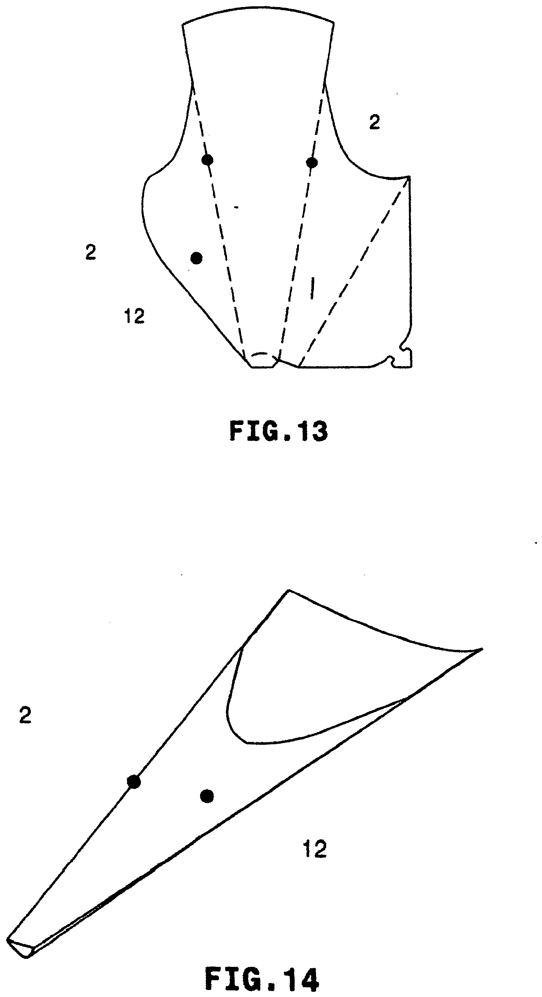

Sur la fig.13, on a représenté schématiquement la pelle (12) à plat pouvant être obtenue par détachement du couvercle (10) de la boite (1) selon l'invention. On observe les marquages de plis (2) permettant après pliage d'obtenir une pelle (12) prête à l'emploi pour retirer les excréments de la litière.

Sur la fig.14, on a représenté schématiquement la pelle (12) obtenue après pliage en suivant les marquages des plis (2).

La boite (1) selon l'invention peut avantageusement être réalisée avec des matières, des moyens industriels et des machines couramment utilisés dans l'industrie du papier, du carton, de l'imprimerie et du thermoformage. Son application industrielle peut réunir différentes machines sur un même site de fabrication dédiée à ce type de produit.

Un premier mode de réalisation industrielle donné à titre d'exemple non limitatif consiste à réaliser la boite (1) pliable en plusieurs séquences de préparation sous forme de semi-produit (19). Avantageusement, on choisira les feuilles en film sous forme de bobines comportant plusieurs centaines de mètre linéaire avec une laize adaptée au produit. Ces bobines pourront être installées dans une machine de contrecollage à rouleaux ou à tapis et déroulées simultanément. Cette machine, appelée aussi machine de complexage, constitue un moyen de dépôt d'adhésif sous forme liquide ou en poudre et un moyen d'assemblage en continu des divers composants. On obtient ainsi un premier semi-produit (19) composé par exemple d'un carton contrecollé à l'aide d'un agent fortement adhérant sur une feuille de papier paraffiné (5) elle-même imprimée d'un décor (13). Ce premier complexe ainsi obtenu se présente sous forme de grands rouleaux ou bobines de plusieurs mètres pour être travaillé en reprise sur une autre machine. Avantageusement, ces rouleaux ou bobines tels qu'ils ressortent de la contrecolleuse sont automatiquement prêts à être reçus par une presse de découpe qui réalisera à son tour la découpe et le marquage simultané des rainures de pliage de la boite (1) en développé à plat réalisant ainsi le semi-produit (19). Le semi-produit (19) sera ensuite repris pour sa mise en forme et finitions définitives comme expliqué ci-dessous.

Selon un autre mode particulier de réalisation, la dite boite (1) est fabriquée avec plusieurs matériaux sous forme de feuilles préalablement coupées au format pour être travaillé en reprise sur une autre machine. Egalement et avantageusement, ces formats tels qu'ils ressortent de la contrecolleuse sont automatiquement prêts à être reçus par une presse de découpe qui réalisera à son tour la découpe et le marquage simultané des rainures de pliage de la boite (1) en développé à plat réalisant ainsi le semi-produit (19). Le semi-produit (19) sera ensuite repris pour sa mise en forme et finitions définitives comme expliqué ci-dessous.

Selon un autre mode particulier de réalisation, à titre d'exemple, on crée une chaine de production à plusieurs postes de travail successifs pour obtenir un produit fini en fin de chaine :
- Sur le premier poste, on réalise le complexe (15) à plat des feuilles composant le développé de la boite (1) sauf la dernière feuille dont la géométrie et la dimension sera légèrement supérieure à la surface à plat du développé de la boite (1).
- Sur le deuxième poste, on réalise le marquage des plis (2) et des coupes à plat pour constituer un semi-produit (19).
- Le troisième poste est composé d'une thermoformeuse équipée d'un préchauffage, d'un chauffage, de pression d'air, de vide d'air, d'une matrice de précontrainte (14) et d'un poste de découpe.
- Le quatrième poste comporte des moyens de pliage sous pression
- Le cinquième poste comporte des moyens d'étiquetage

Les opérations suivantes seront entreprises successivement :
- on réalise le complexe (15) à plat des feuilles composants le développé de la boite (1) sauf la dernière feuille dont la géométrie et la dimension sera légèrement supérieure à la surface à plat du développé de la boite (1).
- Une partie du complexe multicouche (15) préfabriqué, marqué à l'endroit des plis (2) et découpé à plat sous forme de semi-produit (19) est positionnée par des moyens manuels ou automatiques dans la matrice de précontrainte (14) pour une mise en forme intermédiaire.
- La matrice de précontrainte (14) équipée d'un réseau de vide d'air va plaquer par aspiration les parois rectilignes initiales du semi-produit (19) sur les parois en arc (17) de la matrice de précontrainte (14).
- Une feuille de plastique (7) avec une face adhésive est chauffée par la thermoformeuse et vient se placer au-dessus de la matrice de précontrainte (14), puis est aspirée et formée par le réseau de vide d'air.
- Après refroidissement et durcissement de la feuille de plastique (7), on obtient des parois contraintes avec mémoire de forme (17). A la suite, la feuille de plastique (7) est découpée dans la matrice de précontrainte (14) ou sur un autre poste de la thermoformeuse.
- Après découpe, des moyens de pliage utilisant une pression maintiennent la boite (1) en position repliée.
- Le produit fini reçoit des étiquettes de Label et des moyens d'identification du produit tels que les codes-barres.

## Revendications

1. Boite (1) à parois dépliable, sans besoins de manipulation principalement destinée à recevoir de la litière pour animaux, et comportant un fond et au moins 4 parois verticales sur lesquelles ont été pré-marqués à l'outil plusieurs plis (2) pour réaliser des soufflets (16) permettant le pliage et le dépliage des parois de la boite (1), cette boite (1) est pliée à la suite de sa fabrication , la dite boite (1) est fabriquée avec plusieurs matériaux sous forme de feuilles adhérant fortement les unes aux autres, formant ainsi un complexe multicouches (15) rigide et flexible obtenu grâce aux choix des propriétés des adhésifs (8) et à la résistance des matériaux en terme de flexibilité et de compression pour réaliser des parois précontraintes, ladite boite (1) étant **caractérisée en ce que** les parois précontraintes ont une mémoire de forme (17) en arc qui est obtenue du complexe multicouches (15) initial et grâce à au moins une feuille adhérente (7) de dimensions légèrement supérieures à la feuille qu'elle recouvre et à laquelle elle adhère.

2. Boite (1) selon la revendication 1 **caractérisée en ce que** les étapes de fabrication successives permettent d'obtenir un effet ressort et une mémoire de forme (17) des parois en arc précontraint vers l'extérieur pour assurer à la dite boite (1) en position dépliée une bonne rigidité.

3. Boite (1) selon la revendication 1 **caractérisée en ce qu'**elle est équipée d'un bord replié (3) de 45° à 90° vers l'intérieur grâce à une contrainte avec une mémoire de forme (17) en arc, ledit bord replié (3) étant avantageusement obtenu par un marquage sur 2/3 de l'épaisseur des parois avec un outil non tranchant et réalisé sur une bande périphérique d'environ 20 millimètres, de sorte à constituer une solution contre les projections de litière d'une part et contribuer à accentuer la rigidité de la boite (1) en position dépliée d'autre part.

4. Boite selon les revendications 1 et 2 **caractérisée en ce que** la feuille adhérente est formée par une feuille de plastique (7) avec une face adhésive (8) qui par thermoformage est chauffée et vient se placer sur une matrice de précontrainte : suite au refroidissement et durcissement de la feuille de plastique (7), on obtient des parois contraintes avec mémoire de forme (17) de la dite boite (1).

5. Boite (1) selon la revendication 1 **caractérisée en ce que** le complexe multicouches (15) est composé de 2 à 5 feuilles dont l'épaisseur de chacune peut varier de 0.05 millimètres à 5 millimètres suivant le degré de rigidité désiré.

6. Boite (1) selon les revendications 1 et 5 **caractérisée en ce qu'**au moins une feuille du dit complexe multicouches (15) est une feuille en carton (9) et est microporeuse à l'état naturel laissant passer de l'air sous pression à travers son épaisseur pour permettre le thermo-scellage ou le thermoformage d'une des feuilles composant le complexe (15).

7. Boite (1) selon la revendication 5 **caractérisée en ce qu'**au moins une feuille dudit complexe multicouches (15) est un film de plastique (7) biodégradable.

8. Boite (1) selon les revendications 1 et 5 **caractérisée en ce que** ledit complexe multicouches (15) comporte au moins une feuille de carton ondulé (6) sur laquelle a été préalablement contrecollée une feuille de papier paraffiné (5) ayant des propriétés de résistance à l'humidité et des propriétés anti-salissures.

9. Boite (1) selon les revendications 1 et 5 **caractérisée en ce que** le complexe multicouches (15) comporte au moins une feuille imprimée d'un décor (13).

10. Boite (1) selon les revendications 1 et 5 **caractérisée en ce qu'**au moins une feuille du dit complexe multicouches (15) est un film de plastique (7) bicouches co-laminé de polyéthylène (PE) sur une de ses faces.

11. Boite (1) selon les revendications 1 et 5 **caractérisée en ce qu'**au moins une feuille du dit complexe multicouches (15) est une feuille micro-perforée qui laisse passer de l'air sous pression à travers son épaisseur pour permettre le thermo-scellage ou le thermoformage d'une des feuilles composant le complexe (15).

12. Boite (1) selon les revendications 1 et 5 **caractérisée en ce que** le complexe multicouches (15) comporte au moins une feuille recouverte d'un vernis à caractéristiques microporeuses.

13. Boite (1) selon la revendication 1 présentant une forme carrée ou rectangulaire **caractérisée en ce que** les 4 angles sont des pans coupés (4).

14. Boite (1) selon la revendication. 1 **caractérisée en ce que** l'épaisseur de la dite boite (1) en position repliée est inférieure à 15 millimètres pour une version standard basse, et inférieure à 100 millimètres pour une version rehaussée (18) permettant d'y inclure de la litière pour animaux avant le pliage.

15. Boite selon les revendications 1 **caractérisée en ce qu'**elle est équipée d'un couvercle (10) dont le dessus présente des pointillés (11) de prédécoupe et des marquages de plis (2) permettant d'obtenir des accessoires préfabriqués à plat liés à l'utilisation tels qu'au moins une pelle (12) permettant de retirer les excréments de la litière.

16. Procédé d'obtention de la boite (1) selon l'une quelconque des revendications 1 à 15 **caractérisé en ce qu'**une partie du complexe multicouches (15) est préfabriqué, marqué à l'endroit des plis (2), et découpé pour constituer un semi-produit (19) plat, ledit semi-produit (19) étant par la suite positionné sur une forme servant d'une part de matrice (14) et d'autre part d'outils de modification de géométrie initiale dudit semi-produit (19) plat où il est plaqué en force sur les parois de la matrice (14) par un vide d'air pour recevoir au moins une feuille de plastique (7) avec une face adhésive (8) étirée et formée à chaud, puis, après refroidissement, l'ensemble du complexe (15) préalablement mis sous contrainte devient rigide et est découpé aux dimensions du produit fini, consistant en une boite (1) présentée en position pliée grâce à l'intervention de moyens de pliage utilisant une pression.

## Patentansprüche

1. Schachtel (1) mit faltbaren Wänden, ohne Handhabungsaufwand, die hauptsächlich zur Aufnahme von Tierstreu bestimmt ist und einen Boden und mindestens vier vertikale Wände aufweist, auf denen mehrere Falze (2) vorgezeichnet sind, um Faltenbälge (16) zu bilden, die das Falten und Entfalten der Wände der Schachtel (1) ermöglichen, wobei die Schachtel (1) nach der Herstellung gefaltet ist, und wobei die Schachtel (1) aus mehreren Materialien in Form von Folien hergestellt Ist, die fest miteinander verbunden sind und so einen starren und flexiblen Mehrschichtverbund (15) bilden, der durch die Wahl der Eigenschaften der Klebstoffe (8) und den Widerstand der Materialien in Bezug auf Flexibilität und Kompression erzielt wird, um vorgespannte Wände zu bilden, wobei die Schachtel (1) **dadurch gekennzeichnet ist, dass** die vorgespannten Wände ein bogenförmiges Formgedächtnis (17) aufweisen, das von dem ursprünglichen mehrschichtigen Verbund (15) und aufgrund mindestens einer Haftfolie (7) mit Abmessungen erzielt wird, die geringfügig größer sind als die der Folie, die sie bedeckt und an der sie haftet.

2. Schachtel (1) nach Anspruch 1, **dadurch gekennzeichnet, dass** die aufeinanderfolgenden Herstellungsschritte es ermöglichen, einen Federeffekt und ein Formgedächtnis (17) der nach außen vorgespannten bogenförmigen Wände zu erzielen, um der Schachtel (1) in entfaltetem Zustand eine gute Steifigkeit zu verleihen.

3. Schachtel (1) nach Anspruch 1, **dadurch gekennzeichnet, dass** sie mit einem um 45° bis 90° nach innen gebogenen Rand (3) ausgestattet ist, der durch eine Vorspannung mit einem bogenförmigen Formgedächtnis (17) gebildet wird, wobei der gebogene Rand (3) vorteilhafterweise durch eine Markierung auf 2/3 der Wandstärke mit einem nicht scharfen Werkzeug und auf einem Umfangsstreifen von etwa 20 Millimetern hergestellt wird, so dass er einerseits eine Lösung gegen das Herausspritzen von Streu darstellt und andererseits dazu beiträgt, die Steifigkeit der Schachtel (1) in ausgeklapptem Zustand zu erhöhen.

4. Schachtel gemäß den Ansprüchen 1 und 2, **dadurch gekennzeichnet, dass** die Haftfolie aus einer Kunststofffolie (7) mit einer Klebeseite (8) gebildet ist, die durch Thermoformen erhitzt und auf eine Vorspannungsmatrize aufgebracht wird: Nach dem Abkühlen und Aushärten der Kunststofffolie (7) erhält man verspannte Wände mit Formgedächtnis (17) der genannten Schachtel (1).

5. Schachtel (1) gemäß Anspruch 1, **dadurch gekennzeichnet, dass** der Mehrschichtverbund (15) aus 2 bis 5 Folien besteht, deren Dicke je nach gewünschter Steifigkeit zwischen 0,05 Millimetern und 5 Millimetern variieren kann.

6. Schachtel (1) gemäß den Ansprüchen 1 und 5, **dadurch gekennzeichnet, dass** mindestens eine Folie des Mehrschichtverbunds (15) eine Kartonfolie (9) ist und in ihrem natürlichen Zustand mikroporös ist, sodass unter Druck stehende Luft durch ihre Dicke hindurchströmen kann, um das Heißsiegeln oder Thermoformen einer der Folien, aus denen der Verbund (15) besteht, zu ermöglichen.

7. Schachtel (1) gemäß Anspruch 5, **dadurch gekennzeichnet, dass** mindestens eine Folie des Mehrschichtverbunds (15) eine biologisch abbaubare Kunststofffolie (7) ist.

8. Schachtel (1) gemäß den Ansprüchen 1 und 5, **dadurch gekennzeichnet, dass** der Mehrschichtverbund (15) mindestens eine Wellpappeschicht (6) umfasst, auf die zuvor eine paraffinierte Papierschicht (5) mit feuchtigkeitsbeständigen und schmutzabweisenden Eigenschaften aufkaschiert wurde.

9. Schachtel (1) gemäß den Ansprüchen 1 und 5, **dadurch gekennzeichnet, dass** der Mehrschichtverbund (15) mindestens eine mit einem Dekor (13) bedruckte Lage umfasst.

10. Schachtel (1) gemäß den Ansprüchen 1 und 5, **dadurch gekennzeichnet, dass** mindestens eine Lage des mehrschichtigen Verbunds (15) eine zweischichtige Kunststofffolie (7) ist, die auf einer ihrer Seiten mit Polyethylen (PE) co-laminiert ist.

11. Schachtel (1) gemäß den Ansprüchen 1 und 5, **dadurch gekennzeichnet, dass** mindestens eine Folie des Mehrschichtverbunds (15) eine mikroperforierte Folie ist, die unter Druck stehende Luft durch ihre Dicke hindurchlässt, um das Heißsiegeln oder Thermoformen einer der Folien, aus denen der Verbund (15) besteht, zu ermöglichen.

12. Schachtel (1) gemäß den Ansprüchen 1 und 5, **dadurch gekennzeichnet, dass** der Mehrschichtverbund (15) mindestens eine Folie umfasst, die mit einem Lack mit mikroporösen Eigenschaften beschichtet ist.

13. Schachtel (1) gemäß Anspruch 1 mit einer quadratischen oder rechteckigen Form, **dadurch gekennzeichnet, dass** die 4 Ecken abgeschrägte Kanten (4) sind.

14. Schachtel (1) gemäß Anspruch 1, **dadurch gekennzeichnet, dass** die Dicke der Schachtel (1) in zusammengeklapptem Zustand bei einer niedrigen Standardausführung weniger als 15 Millimeter und bei einer erhöhten Ausführung (18), die es ermöglicht, vor dem Zusammenklappen Tierstreu einzufügen, weniger als 100 Millimeter beträgt.

15. Schachtel gemäß den Ansprüchen 1, **dadurch gekennzeichnet, dass** sie mit einem Deckel (10) ausgestattet ist, dessen Oberseite vorgestanzte Punkte (11) und Falzmarkierungen (2) aufweist, die es ermöglichen, flach vorgefertigte, für die Verwendung bestimmte Zubehörteile zu erhalten, wie beispielsweise mindestens eine Schaufel (12) zum Entfernen von Exkrementen aus der Einstreu.

16. Verfahren zur Herstellung der Schachtel (1) gemäß einem der Ansprüche 1 bis 15, **dadurch gekennzeichnet, dass** ein Teil des Mehrschichtverbunds (15) vorgefertigt, an den Falzstellen (2) markiert und zugeschnitten wird, um ein flaches Halbzeug (19) zu bilden, wobei das Halbzeug (19) anschließend auf eine Form gelegt wird, die einerseits als Matrize (14) und andererseits als Werkzeug zur Veränderung der ursprünglichen Geometrie des flachen Halbzeugs (19) dient, wo es durch einen Luftraum mit Kraft an die Wände der Matrize (14) gedrückt wird, um mindestens eine Kunststofffolie (7) mit einer durch Strecken und Warmformen hergestellten Klebefläche (8) aufzunehmen, wobei nach dem Abkühlen der gesamte zuvor unter Spannung gesetzte Verbund (15) starr wird und auf die Abmessungen des Endprodukts zugeschnitten wird, das aus einer Schachtel (1) besteht, die dank des Einsatzes von drucknutzenden Faltmitteln in gefalteter Position präsentiert wird.

## Claims

1. Box (1) with foldable walls, without the need for handling, mainly intended to accommodate animal litter, and comprising a bottom and at least 4 vertical walls on which several folds (2) have been pre-marked with the tool to make bellows (16) enabling the folding and unfolding of the walls of the box (1), this box (1) is folded following its manufacture, and said box (1) is manufactured with several materials in the form of sheets adhering strongly to each other, thus forming a rigid and flexible multilayer complex (15) that is obtained thanks to the choice of the properties of the adhesives (8) and the resistance of the materials in terms of flexibility and compression to make prestressed walls, said box (1) being **characterised in that** the prestressed walls have an arc shape memory (17), which is obtained from the initial multilayer complex (15) and thanks to at least one adherent sheet (7) of dimensions slightly larger than the sheet it covers and to which it adheres.

2. Box (1) according to claim 1 **characterised in that** the successive manufacturing steps make it possible to obtain a spring effect and a shape memory (17) of the walls in an arc prestressed towards the outside to ensure that said box (1) has good rigidity in the unfolded position.

3. Box (1) according to claim 1, **characterised in that** it is equipped with a folded edge (3) from 45° to 90° inwards thanks to a stress with an arc shape memory (17), said folded edge (3) being advantageously obtained by marking 2/3 of the thickness of the walls with a non-cutting tool and made on a peripheral strip of about 20 millimetres, so as to constitute a solution against litter projections on the one hand, and to contribute to accentuating the rigidity of the box (1) in the unfolded position on the other hand.

4. Box according to claims 1 and 2 **characterised in that** the adherent sheet is formed by a plastic sheet (7) with an adhesive side (8) which is heated by thermoforming and is placed on a prestressing matrix: following the cooling and hardening of the plastic sheet (7), we obtain stressed walls with shape memory (17) of said box (1).

5. Box (1) according to claim 1, **characterised in that** the multilayer complex (15) is composed of 2 to 5 sheets, the thickness of each of which can vary from 0.05 millimetres to 5 millimetres depending on the desired degree of rigidity.

6. Box (1) according to claims 1 and 5 **characterised in that** at least one sheet of said multilayer complex (15) is a cardboard sheet (9) and is microporous in the natural state, allowing air to pass under pressure through its thickness to enable the heat-sealing or thermoforming of one of the sheets making up the complex (15).

7. Box (1) according to claim 5, **characterised in that** at least one sheet of said multilayer complex (15) is a biodegradable plastic film (7).

8. Box (1) according to claims 1 and 5 **characterised in that** said multilayer complex (15) comprises at least one sheet of corrugated cardboard (6) on which a sheet of waxed paper (5) with moisture resistance and anti-fouling properties has been previously laminated.

9. Box (1) according to claims 1 and 5 **characterised in that** the multilayer complex (15) comprises at least one sheet printed with a decoration (13).

10. Box (1) according to claims 1 and 5 **characterised in that** at least one sheet of said multilayer complex (15) is a co-laminated polyethylene (PE) bilayer plastic film (7) on one of its faces.

11. Box (1) according to claims 1 and 5 **characterised in that** at least one sheet of said multilayer complex (15) is a micro-perforated sheet that allows air to pass under pressure through its thickness to enable the heat-sealing or thermoforming of one of the sheets making up the complex (15).

12. Box (1) according to claims 1 and 5 **characterised in that** the multilayer complex (15) comprises at least one sheet covered with a varnish with microporous characteristics.

13. Box (1) according to claim 1 having a square or rectangular shape **characterised in that** the 4 corners are cut sections (4).

14. Box (1) according to claim 1, **characterised in that** the thickness of said box (1) in the folded position is less than 15 millimetres for a low standard version, and less than 100 millimetres for an enhanced version (18) allowing animal litter to be included before folding.

15. Box according to claims 1 **characterised in that** it is equipped with a lid (10), the top of which has pre-cutting dotted lines (11) and fold markings (2) enabling the obtaining of prefabricated flat accessories related to the use, such as at least one shovel (12) for removing excrement from the litter.

16. Method of obtaining the box (1) according to any one of claims 1 to 15 **characterised in that** a part of the multilayer complex (15) is prefabricated, marked at the location of the folds (2), and cut to form a flat semi-product (19), said semi-product (19) being subsequently positioned on a form serving on the one hand as a matrix (14) and on the other hand as tools for modifying the initial geometry of said flat semi-product (19) where it is force-plated on the walls of the matrix (14) by an air vacuum to receive at least one plastic sheet (7) with an adhesive face (8) stretched and hot-formed, then, after cooling, the entire complex (15) previously placed under stress becomes rigid and is cut to the dimensions of the finished product, consisting of a box (1) presented in the folded position thanks to the intervention of folding means using pressure.
